# EUROPEAN PATENT APPLICATION

(11) **EP 2 000 962 A1**
(43) Date of publication of application: **10.12.2008**
(21) Application number: 07109741.4
(22) Date of filing: 06.06.2007
(51) Int. Cl.: G06Q 10/00, G06Q 30/00

(54) **Estimating crowds**

(71) Applicant: Nederlandse Organisatie voor Toegepast- Natuurwetenschappelijk Onderzoek TNO, 2628 VK Delft (NL)
(72) Inventor: Vonder, Matthijs Raymond, 9731 LW Groningen (NL); Langius, Erik Alle Fokko, 9714 BA Groningen (NL); van den Akker, Evert, 8432 PZ Haule (NL); van Bekkum, Michael Alexander, 7511 ZG Enschede (NL); van der Waaij, Bram Dirk, 9728 WR Groningen (NL)
(74) Representative: van Loon, C.J.J.

(57) **Abstract**

A method of estimating a number of people (1), of which at least some carry a mobile communication device (2), comprises the steps of:
• counting, at a first location (L1), a first group of people so as to obtain a first number (N0),
• counting, at the first location (L1), the number of enabled mobile communication devices (2) in the first group of people so as to obtain a second number (N1),
• determining the ratio (R) of the first number (N0) and second number (N1),
• counting, at a second location (L2), the number of enabled communication devices (2) so as to obtain a third number (N2), and
• using the ratio (R) to estimate the number of people at the second location (L2).
The mobile communication devices may be arranged for using the Bluetooth^{®} protocol.

## Description

The present invention relates to estimating crowds. More in particular, the present invention relates to a method and a device for estimating the size of a crowd, such as the number of people present at a certain location.

It is often desired to obtain an estimate of the number of people present at a certain location, for example a tourist attraction, a sports event or an open air music festival. Managers of amusement parks prefer to spread the visitors over the grounds and are interested in knowing how many people are present at various locations within the park.

Various Prior Art publications discuss systems which make it possible to track individual visitors or travellers. These known systems use the identity of the individual person to provide personal advice and information. This may, however, harm the privacy of the person, as his/her identification data are used to retrieve suitable information.

International Patent Application WO 2004/057543 discloses a system and method for enhanced security in an airport terminal, where all passengers are required to carry a portable electronic handset receiving optically transmitted positioning data and other information. The portable electronic handsets track the location of individual passengers, thus enhancing the airport security but severely reducing the personal privacy of the passengers. If a passenger discards her portable electronic handset, the system is no longer capable of tracking her.

International Patent Application WO 03/016938 discloses a method for establishing the location of one or more individuals using fixed radio frequency (RF) transceiver devices, which may use Bluetooth® technology. Each person is issued a portable RF transceiver device.

These Prior Art methods require each person to receive and carry a transceiver or similar device, and further require all transceivers to be activated for the method to work. If a person does not carry a transceiver device or if the transceiver device is not switched on, these known methods no longer apply.

It is an object of the present invention to overcome these and other problems of the Prior Art and to provide a method and system for estimating a number of people which do not require all people to carry an enabled device.

It is another object of the present invention to provide a method and system for estimating a number of people which protect the privacy of the people being counted.

Accordingly, the present invention provides a method of estimating a number of people, at least some people carrying a mobile communication device, the method comprising the steps of:
- counting, at a first location, a first group of people so as to obtain a first number,
- counting, at the first location, the number of enabled mobile communication devices in the first group of people so as to obtain a second number,
- determining the ratio of the first number and second number,
- counting, at a second location, the number of enabled communication devices so as to obtain a third number, and
- using the ratio to estimate the number of people at the second location.
By using the ratio of the total number of people and the number of enabled mobile communication devices, a reliable estimate of the total number of people at another location can be made. At the first location, the ratio is determined, while at the second location this ratio is used to estimate the number of people present at the second location. In the present invention it is therefore not required that all people carry a mobile communication device, nor that all mobile communication devices are activated.

It is noted that a mobile communication device may be constituted by a mobile ("cellular") telephone apparatus, such as GSM or UMTS telephones, but also by other portable consumer devices having (wireless) communication facilities, for example PDAs (Personal Digital Assistants), portable computers such as laptop and/or notebook computers, game computers, and other devices. It is further noted that the term "enabled devices" is meant to refer to devices which are capable of transmitting a communication signal, such as an identification signal, and that such devices may be active, in stand-by mode or, in some instances, even be switched off.

It is preferred that the step of determining the ratio involves dividing the first number by the second number, and wherein the step of using the ratio involves multiplying the third number and the ratio. Alternatively, the inverse ratio could be calculated by dividing the second number by the first number, and then the third number could be divided by the inverse ratio. Those skilled in the art will appreciate that instead of a ratio, other similar measures can be used to obtain an equivalent result, for example a difference.

The step of counting the first group of people so as to obtain the first number may involve using one or more turnstiles or similar devices. Such devices typically count people using mechanical means. Alternatively, optical means for counting people may be utilized, or the number of sold tickets may be counted.

The step of counting the number of enabled mobile communication devices preferably involves counting the number of different identification signals of such devices at certain locations. That is, the wireless signals of the devices being counted are preferably distinguished on the basis of any identification data these signals may contain, but these identification data are not used for other purposes. In this way, the privacy of the carriers of the mobile communication devices is not compromised. Instead of identification data, signal strength measurements could be used to distinguish the mobile communication devices being counted.

As noted above, the present invention does not require tracking of individual people or the transmission of identification data to a central system, as in the Prior Art. Although such use of identification data is possible in the present invention, it is preferably omitted.

In a particular advantageous embodiment, the mobile communication devices are arranged for communicating using the Bluetooth® protocol. This well-known protocol is very suitable for wireless communication over medium to small distances and Bluetooth® communication devices are widely available.

The first location may be at an entrance to an enclosed area, the second location being within the enclosed area. This allows the number of people at any location within the enclosed area to be estimated. The second location may coincide with the whole enclosed area or with a part thereof. Examples of enclosed areas in which the invention can advantageously be used are amusement parks, zoos, sports stadia, theatres, cinemas, school buildings and school grounds, university campuses, office buildings, factory grounds, open air swimming pools, beaches having limited access, and other areas which may be enclosed. The invention can also be used in areas which are not enclosed, such as some public parks and beaches.

In some embodiments, the first location and the second location may be identical. This allows the number of people to be estimated at the same location but at different points in time.

The steps of counting at the first location and of counting at the second location may be carried out at different points in time. In such embodiments, the points in time are preferably separated by a delay time equal to the required travel time between the first location and the second location.

The present invention additionally provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention further provides a device for estimating a number of people, at least some people carrying a mobile communication device, the device comprising a counting unit and a processing unit, the counting unit being arranged for:
• counting, at a first location, a first group of people so as to obtain a first number,
• counting, at the first location, the number of enabled mobile communication devices in the first group of people so as to obtain a second number,
• counting, at a second location, the number of enabled communication devices so as to obtain a third number,
the processing unit being arranged for:
• determining the ratio of the first number and second number, and
• using the ratio to estimate the number of people at the second location.
The counting unit may be arranged for counting the number of different identification signals of the mobile communication devices. The mobile communication devices may be arranged for communicating using the Bluetooth® protocol.

The present invention also provides a system for estimating a number of people, the system comprising a device as defined above. The system according to the present invention may further comprise at least one antenna unit and at least one turnstile.

The present invention will further be explained below with reference to exemplary embodiments illustrated in the accompanying drawings, in which:
Fig. 1 schematically shows a system for estimating the number of people at a location according to the present invention.
Fig. 2 schematically shows a device for estimating the number of people at a location according to the present invention.

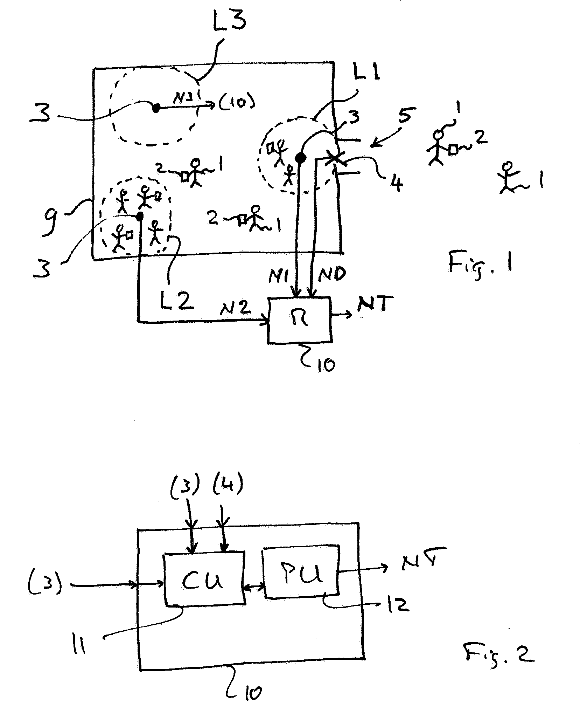

The system shown merely by way of non-limiting example in Fig. 1 comprises antenna units 3, a turnstile 4 and a estimation device 10. The antenna units 3 are located within an enclosed area 9, for example an amusement park or a (large) building. The turnstile 4 is placed at the entrance 5 of the enclosed area 9 such that people 1 wanting to enter the enclosed area 9 pass the turnstile 4. It will be understood that multiple turnstiles may be present, and that the enclosed area 9 may have more than one entrance. Instead of an enclosed area, a target area may be used which is not or not fully enclosed.

The antennas 3 and the turnstile 4 are coupled to the estimation device 10. This coupling may be achieved by cables or by wireless connections. In the example shown, the antenna having a coverage area L1 is arranged close to the entrance 5 such that every person passing through the turnstile 4 will also pass through the (first) coverage area L1. The (second and third) antenna coverage areas L2 and L3 are, in the example shown, spaced apart from the (first) coverage area L1.

In other embodiments the coverage areas may overlap or even coincide completely. In still other embodiments, at least one of the antenna coverage areas may coincide with the enclosed area 9.

Some persons 1 carry a portable device 2, for example a mobile (cellular) telephone, a PDS or a notebook computer. Many of such devices are capable of wireless communication, for example using the Bluetooth® protocol, the GSM protocol or the UMTS protocol. When the devices 2 are enabled, they will typically transmit identification signals and/or other signals at regular intervals. The antenna units 3 are capable of receiving wireless signals transmitted by the mobile communication devices 2. The signals can be counted, thus producing the number of active (that is, enabled) portable devices within the particular antenna coverage area.

The counting of the signals is preferably based upon the identification of the mobile communication devices: each device is counted only once (during a certain time period) by counting a signal containing a particular identification only once. Accordingly, the second and subsequent signal received from the same mobile device (within a certain time period) is not counted but ignored. The identification contained in the signal may a device identification, a user identification or another suitable identification allowing the portable devices to be distinguished.

Each of the antenna coverage areas L1, L2 and L3 defines a location where the number of people may be counted. To this end, the antenna units 3 collect wireless signals from the enabled mobile communication devices 2. These signals are counted, either at the antenna unit 3 or at the estimating device 10. The resulting numbers are collected and processed by the estimating device 10 to yield a desired estimate in a certain location or area.

In the example of Fig. 1, each (antenna) coverage area L1, L2 and L3 produces a number N1, N2 and N3 respectively representing the quantity of mobile communication devices in each area. In addition, the turnstile (or equivalent) unit 4 produces a number N0 representing the number of people counted at the turnstile. In contrast to the numbers N1, N2 and N3, the number N0 is not based upon the signals transmitted by the mobile communication devices but is based upon the quantity of people and includes both people carrying an enabled mobile communication device and people not carrying such a device. The number N0 may also be based upon automatic processing of video images, on visual estimates, on the number of tickets sold, and/or on other techniques.

In the estimating unit 10 the number N1, which represents the quantity of enabled mobile communication devices in the first coverage area L1, is divided by the number N0, which represents the quantity of people counted at the turnstile 4, to yield a ratio R. This ratio effectively indicates which fraction of the people entering the enclosed area 9 carries an enabled mobile communication device. By multiplying the ratio R and the number N2, which represents the quantity of enabled mobile communication devices in the second coverage area L2, an estimate of the total number of people in the second coverage area L2 is obtained. Similarly, by multiplying the ratio R and the number N3, which represents the quantity of enabled mobile communication devices in the third coverage area L3, an estimate of the total number of people in the third coverage area L3 may be obtained.

As will be clear from the above example, it is sufficient to count (or estimate) the number of people only once, in the present example at the turnstile 4, to be able to estimate the number of people at other locations. Instead of counting the total quantity of people (with or without an enabled device) at one location, for example at the turnstile 4, it is also possible to count the total number of people at more than one location and aggregate the results.

Although the coverage areas illustrated in Fig. 1 have approximately the same dimensions, the first coverage area L1 may be significantly smaller than the other coverage areas. In certain embodiments, the first coverage area L1 only covers the area immediately past the turnstile 4 so as to only detect active portable devices (that is, enabled mobile communication devices) passing through the turnstile zone.

In other embodiments, however, the first coverage area L1 may be larger and have dimensions similar to those of the other coverage areas, or may even substantially coincide with the enclosed area 9. In such embodiments it may be necessary to distinguish between active portable devices passing through the turnstiles and active portable devices staying in the area. This can be done, for example, by time-stamping the first detection of each device in the coverage area and comparing this first detection with later detections in the same coverage area. Active portable devices detected in only one time period (of e.g. 1 minute or 3 minutes) have passed through and left the area, while active portable devices detected in subsequent time periods have stayed in the area. This technique may be applied to all coverage areas to distinguish between temporary and more permanent visitors to the area.

Similar techniques may also be used to adjust the ratio R for people enabling or disabling their portable device. It could be periodically checked whether a portable device first detected in the first coverage area L1 is still present in any of the coverage areas. This check can be carried out using the device's unique identification, which must be temporarily stored for this purpose. If, after a certain period (e.g. 10 minutes of 1 hour) the device cannot be detected in any of the coverage areas, it is assumed that is has been switched off and the ratio R is adjusted accordingly (in such embodiments the coverage areas will typically overlap or at least provide a full coverage of the target area). Conversely, if after a certain period an enabled portable device is detected which has not been detected before, it is assumed that a new portable device has been enabled and the ratio R is also adjusted accordingly.

As mentioned above, the counting of the enabled mobile communication devices may be carried out at the antenna units 3 or at the estimating unit 10. In either case, some mobile communication devices could be counted twice if two coverage areas overlap. In such cases, the detected mobile communication device could be assigned to the "nearest" coverage area ("nearest" being determined by signal strength), or could be assigned for 50% to each of the overlapping coverage areas. Alternative solutions, in which the exact location of the detected device is determined on the basis of, for example, triple location measurements, can also be envisaged.

The estimation device 10 according to the present invention is shown in more detail in Fig. 2. In the embodiment shown, the estimation device 10 comprises a counting unit (CU) 11 and a processing unit (PU) 12. The counting unit receives counting information from the antenna units 3 and the turnstile unit 4 and stores this or related information. In some embodiments, the counting unit 11 and the processing unit 12 may be combined into a single, integrated device. This integrated estimation device may comprise a processor and an associated memory. The memory may store both count values (including the numbers N0-N3) and processor instructions for carrying out the required calculations.

This counting information is, for example, information identifying a particular mobile communication device and may include a point in time at which the information is obtained. Such additional time information may prevent multiple counting of a single device within a certain time period. The counting information may also be pre-processed counting information, for example counting information from which multiple counts of the same device have already been removed.

As mentioned above, the identification information need only be used to distinguish mobile devices and is preferably discarded as soon as this information has been used for counting. In this way, the privacy of the people carrying the enabled mobile communication devices is not affected.

The counting information stored in the counting unit 11 is passed on to the processing unit 12, which calculates the above-mentioned ratio R and applies the ratio R to the appropriate numbers. The ratio R can, for example, be used to estimate the quantity of people in the third coverage area L3 on the basis of the number N3.

If, for example, the number N0 equals 1000 and the number N1 equals 200, then the ratio R equals 200/1000 = 0.2 (that is, 20% of the people carry an enabled portable device). If the number N3 equals 30, then the (total) number of people within the coverage area L3 is estimated to be 30/0.2 = 150. The processing unit 12 outputs an estimated total number NT of people for a certain location, for example the antenna coverage area L3.

The ratio R may vary over time as people switch their portable devices on or off. For this reason, it may be advantageous to repeat the determination of the ratio R at regular intervals. When applying a newly determined ratio to a certain location (that is, coverage area), the travel time from the area where the ratio was determined to the area where the ratio is applied may be taken into account. This travel time may depend on the (e.g. walking or cycling) speed of the people concerned and on any obstacles on the trajectory of these people.

It is not necessary to accurately determine the ratio R when relative quantities of people are to be estimated. In some applications, it is necessary to know where most people are assembled, for example to efficiently direct policemen and first aid assistants to the place where they are most likely needed. Even a relatively inaccurate estimate of the ratio R will in such applications still provide a useful estimate of where the busiest location is to be found.

Although the ratio R may be determined on a selected, relatively small area, for example the area L1 near the entrance of the enclosed area 9 in Fig. 1, it is also possible to use the entire available area to determine the ratio R, so the entire enclosed area 9 in the same example.

In some embodiments, location of the coverage areas can be varied by using mobile antenna units. Such "portable" of at least movable antenna units can be put in different locations so as to adjust the coverage areas as necessary.

By recording the estimates of the number of people at a location at different points in time, a time-dependent estimate can be obtained.

Although the present invention has been explained with reference to the counting of people, it may also be applied to the counting of animals (e.g. horses, cows, or dinosaurs) or objects (e.g. cars or ships).

The present invention is based upon the insight that it is not necessary for each person to carry a detectable device in order to estimate the number of people at a certain location, as long as the ratio between the number of devices and the number of people can be determined. The present invention benefits from the further insight that the detection of active devices carried by people can advantageously be carried out using readily available technology such as Bluetooth® or similar technology.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method of estimating a number of people, at least some people carrying a mobile communication device, the method comprising the steps of:
• counting, at a first location (L1), a first group of people so as to obtain a first number (N0),
• counting, at the first location (L1), the number of enabled mobile communication devices (2) in the first group of people so as to obtain a second number (N1),
• determining the ratio (R) of the first number (N0) and second number (N1),
• counting, at a second location (L2), the number of enabled communication devices (2) so as to obtain a third number (N2), and
• using the ratio (R) to estimate the number of people at the second location (L2).

2. The method according to claim 1, wherein the step of determining the ratio (R) involves dividing the first number by the second number, and wherein the step of using the ratio involves multiplying the third number (N2) and the ratio.

3. The method according to claim 1 or 2, wherein the step of counting the first group of people involves using a turnstile (4).

4. The method according to any of the preceding claims, wherein the step of counting the number of enabled mobile communication devices (2) involves counting the number of different identification signals of such devices.

5. The method according to any of the preceding claims, wherein the mobile communication devices (2) are arranged for communicating using the Bluetooth® protocol.

6. The method according to any of the preceding claims, wherein the first location (L1) is at an entrance to an enclosed area (9), and wherein the second location (L2) is within the enclosed area or substantially coincides with the enclosed area.

7. The method according to any of claims 1-5, wherein the first location (L1) and the second location (L2) are identical.

8. The method according to any of the preceding claims, wherein steps of counting at the first location (L1) and of counting at the second location (L2) are carried out at different points in time.

9. The method according to claims 6 and 8, wherein the points in time are separated by a delay time equal to the required travel time between the first location (L1) and the second location (L2).

10. A computer program product for carrying out the method according to any of the preceding claims.

11. A device (10) for estimating a number of people (1), at least some people carrying a mobile communication device (2), the device comprising a counting unit (11) and a processing unit (12), the counting unit being arranged for:
• counting, at a first location (L1), a first group of people so as to obtain a first number (N0),
• counting, at the first location (L1), the number of enabled mobile communication devices (2) in the first group of people so as to obtain a second number (N1),
• counting, at a second location (L2), the number of enabled communication devices (2) so as to obtain a third number (N2),
the processing unit being arranged for:
• determining the ratio (R) of the first number (N0) and second number (N1), and
• using the ratio (R) to estimate the number of people at the second location (L2).

12. The device according to claim 11, wherein the counting unit (11) is arranged for counting the number of different identification signals of the mobile communication devices (2).

13. The device according to claim 11 or 12, wherein the mobile communication devices (2) are arranged for communicating using the Bluetooth® protocol.

14. A system for estimating a number of people (1), the system comprising a device (10) according to claim 11, 12 or 13.

15. The system according to claim 14, further comprising at least one antenna unit (3) and at least one turnstile (4).
